# EUROPEAN PATENT SPECIFICATION

(11) **EP 1 802 435 B1**
(45) Date of publication and mention of the grant of the patent: **17.03.2010**
(21) Application number: 05792216.3
(22) Date of filing: 30.09.2005
(51) Int. Cl.: B29C 45/27, B29C 45/04

(54) **SELF-ALIGNING ARTICULATED JOINT FOR USE IN A HOT RUNNER SYSTEM**
SELBSTAUSRICHTENDE GELENKVERBINDUNG ZUR VERWENDUNG IN EINEM HEISSKANALSYSTEM
JOINT ARTICULE AUTO-ALIGNE POUR SYSTEME A CANAL CHAUFFE

(30) Priority: 15.10.2004 US 966709
(43) Date of publication of application: 04.07.2007
(73) Proprietor: Husky Injection Molding Systems Ltd., Bolton, ON L7E 5S5 (CA)
(72) Inventor: MAI, Arnold, D-54666 Irrel (DE)
(74) Representative: Cramphorn, Conrad
(86) International application number: PCT/CA2005/001497
(87) International publication number: WO 2006/039784

(56) References cited:
- DE-B3- 10 342 386
- GB-A- 1 062 169
- JP-A- 8 300 412
- US-A- 5 522 720
- US-A- 5 522 720

## Description

### FIELD OF THE INVENTION

The present invention relates to an improved injection molding apparatus and method whereby a self-aligning articulated coupling allows molten material to be transmitted between an injection unit and a runner system in a movable mold component, thus accommodating for slight movements between the injection unit and, for example, a hot runner system caused by thermal elongation of the heated components as well as due to ambient molding conditions.

### DESCRIPTION OF RELATED ART

In some injection molding applications, the material being molded may lose desired properties if it is exposed to oxygen during molding processes, such as, for example, by parts disconnecting at the interface between the injection unit and the hot runner system. Consequently, in these applications there is a need for the injection unit of the molding machine, in which the material is plasticized, to be continuously sealed to the hot runner system of the mold that is distributing the material to the mold cavity or cavities. It is also desirable for the injection unit to remain directly connected and sealed to the mold or machine's movable section (containing the material infeeding port) throughout the mold's traveling portion of the molding cycle. This is especially true in some multi-material injection molding applications where one of the injection units moves with the movable portion of the mold. This movement, together with ambient molding conditions such as vibration, heat cycling, metal fatigue, etc., may cause damage at the interface between the injection unit and the hot runner system, leading to a leak of melt under high pressure. Indeed, as will now be understood, the hot runner is a highly stressed component (in terms of both mechanical and thermal loading) and deflection or bowing of the hot runner can cause system problems, especially relating to melt leakage.

U.S. Patent No. 4,243,362 to Rees and U.S. Patent No. 4,444,711 to Schad both disclose multi-material turret injection molding machines having one of their two injection units mounted on the machine's movable platen and directly connected to that portion of the mold that is mounted to the movable platen with a conventional sealing nozzle/bush interface. The nozzle remains sealed and connected to the mold infeeding port throughout the molding cycle by virtue of the injection unit being mounted on top of the moving platen and traveling therewith.

Japanese Publication 61-121912 to Shoichi discloses a multi-material injection molding machine having two injection units that connect, via nozzles, to hot runners mounted within intermediate movable platens. There is no disclosure that the injection units remain sealed to the hot runners throughout the molding cycle. However, it can be inferred from the figures that if the injection units do not maintain a sealed connection throughout the molding cycle they must move into and out of a sealing engagement with hot runners so that sufficient clearance can be provided to allow the movable platens to move when the molds open.

PCT publication WO 99/36244 to Rivi discloses an injection unit mounted on a mold and maintaining a sealed connection to the mold's infeeding port throughout the molding cycle.

PCT publication WO 02/22340 to Schuett discloses an injection molding machine having a single injection unit slidably mounted alongside and parallel to the clamp mechanism that is releasably sealed to the molds' infeeding ports by a cylinder that also maintains the sealed relationship throughout the molding cycle. The cylinder disconnects the injection unit from the molds' infeeding ports and repositions the injection unit into a special location for purging. There is no disclosure of any sealing features or self-aligning features of the injection unit.

U.S. Patent No. 3,718,166 to Gordon discloses an injection molding machine with multiple nozzles that are pivotably mounted in a manifold. Each nozzle body includes a spherical counting in the manifold to allow it to pivot with respect to its alignment with the manifold. Springs are used to urge the nozzles toward the mold interface. Unfortunately, ant various operating temperatures, differing amounts of thermal expansion in the components provide the potential for material leakage or moving part seizing at the spherical interface with the melt channel.

U.S. Patent No. 4,702,689 to Schmidt discloses a pivotable hot runner nozzle that can be rotationally oriented to align with a mold cavity surface while maintaining a sealed connection to the hot runner manifold. Once the nozzle has been manually aligned, it is clamped in position and it can no longer re-align with any subsequent movement of the components.

U.S. Patent No. 5,540,580 to Takada discloses a hot runner connection to a machine nozzle having a rotatable connection through which the melt channel passes.

U.S. Patent No. 5,522,720 to Schad describes various springloaded, pivoting nozzle tip-to-adaptor interfaces for molding systems. In the multi-mold environment described in U.S. Patent; No. 5,522,720, distinct hot runners in distinct and movable mold carriers must be cyclically coupled and aligned (via sprue-bars of varying lengths) with a melt channel from the plasticizing unit. Complementary convex-concave surfaces of the nozzle tip and an adaptor ensure that the system is "return position error tolerant" and, consequently, that melt channel and sprue-bar misalignment can be compensated at the pivoting/spherical interface.

### SUMMARY OF THE INVENTION

The invention is defined by the features of claim 1. There is provided an injection molding hot runner system, comprising: a hot runner mounted on a moving carrier; an injection unit; an articulated joint disposed with the hot runner and configured to permit movement therebetween, said articulated joint comprising: a melt channel configured to provide, in use, a melt to the hot runner; a first spherical surface in contact with a first concave pad; and a second spherical surface in contact with a second concave pad, one of the spherical surfaces being configured to be coupled to the hot runner, and the concave pads being configured to be coupled to an injection unit; said injection unit configured to move with respect to rails, and wherein a plurality of flexible pads are configured: (i) to be disposed between said injection unit and the rails; and (ii) to avoid overloading and damage on said injection unit and the rails caused by misalignment due to thermal elongation of heated components and/or incorrect setup/leveling..

The present invention advantageously provides a shelf-aligning articulated injection molding coupling which allows the melt to be transmitted between the injection unit and the hot runner system in a movable mold component.

The preferred embodiments of the present invention beneficially provide an injection unit that will remain reliably sealed to the hot runner system in a movable mold section throughout the mold's traveling portion of the molding cycle. Moreover, the configuration of the present invention mean that it is easy to install, maintain and service.

### BRIEF DESCRIPTION OF THE DRAWINGS

Exemplary embodiments of the presently preferred features of the present invention will now be described with reference to the accompanying drawings, in which:
FIG. 1 is a schematic plan view of a multi-material injection molding machine according to a preferred embodiment of the present invention;
FIG. 2 is a perspective view of the multi-material injection molding machine according to a preferred embodiment of the present invention;
FIG. 3 is a close-up perspective view of the articulated joint location according to a preferred embodiment of the present invention;
FIG. 4 is a schematic plan view of the preferred embodiment of a hot runner-injection unit connection assembly of FIG. 1;
FIG. 5 is a cross section view of a preferred distributor block and hot runner extension of FIG. 1;
FIG. 6 is an isometric view of the preferred distributor block and hot runner extension of the FIG. 1;
FIG. 7 is an end view of a preferred distributor block of FIG. 1; and
FIG. 8 is an exploded isometric view of a second injection unit mounting of FIG. 1.

### DETAILED DESCRIPTION OF A PREFERRED EMBODIMENT

The present invention will now be described with respect to several embodiments in which a plastic injection molding machine injects two different plastic melts into a mold through two different runner systems, especially hot runner systems. The second injection unit is mounted to the movable portion of the mold, and thus is supplied with the second plastic melt through an improved articulated coupling which maintains a good seal throughout its operating environment. However, the present invention also finds applicability in any injection molding process (such as thixomolding, injection-blow molding and injection-compression molding) which may benefit from being able to provide a melt through an articulated coupling.

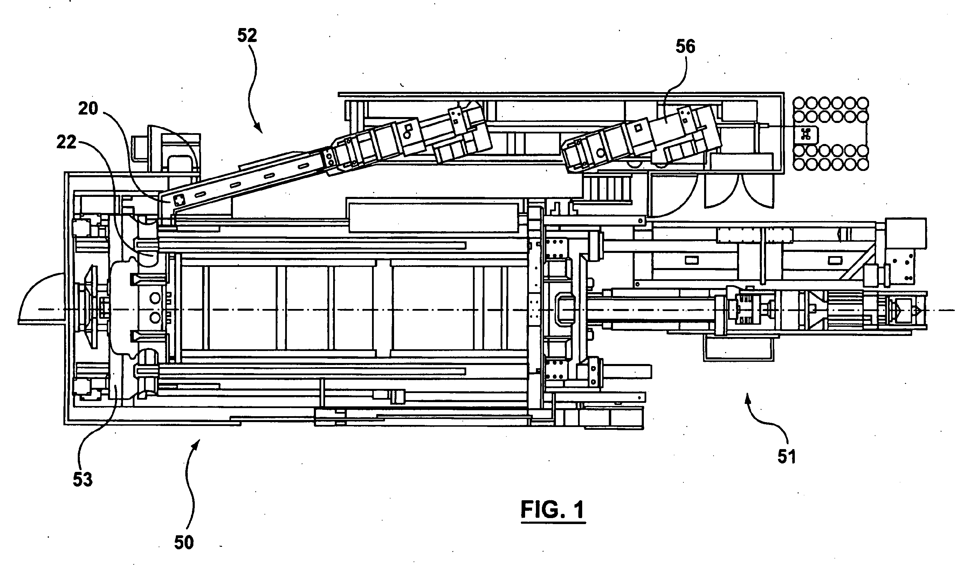

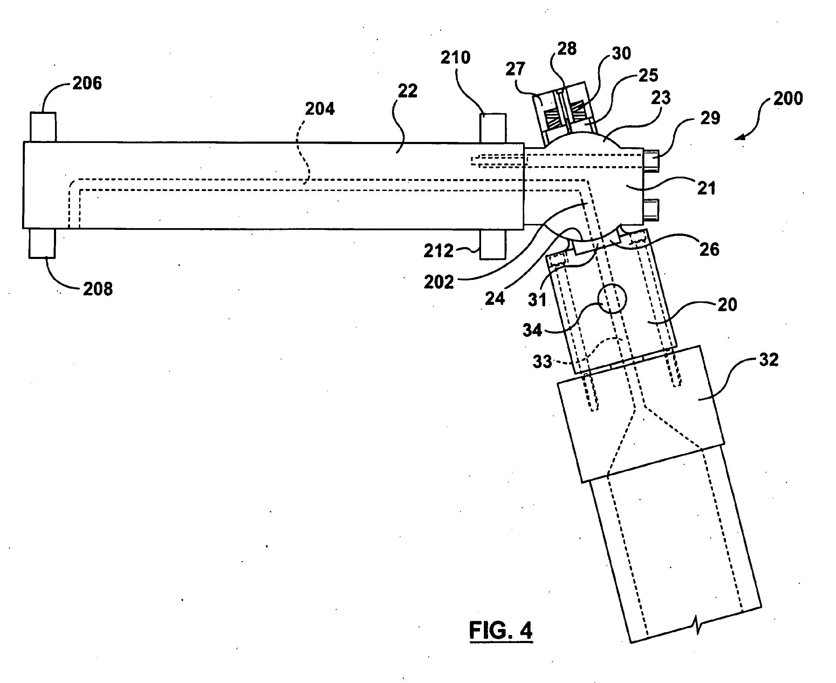

FIGs. 1 to 3 are schematic and perspective views of a multi-material injection molding machine according to a preferred embodiment of the present invention. The molding machine comprises a clamp unit 50, a first injection unit 51 and a second injection unit 52. The second injection unit 52 is bolted to a distributor block 20 that is bolted to a hot runner 22 that is, in turn, attached to the moving platen 53. As will be understood, the hot runner 22 is actually held in place by insulator blocks 206-212 of FIG. 4.

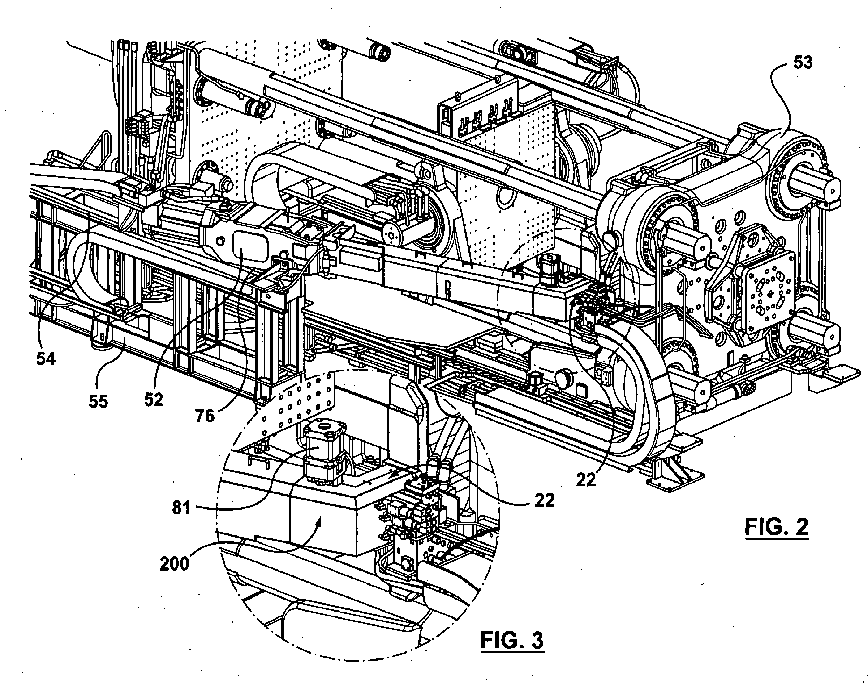

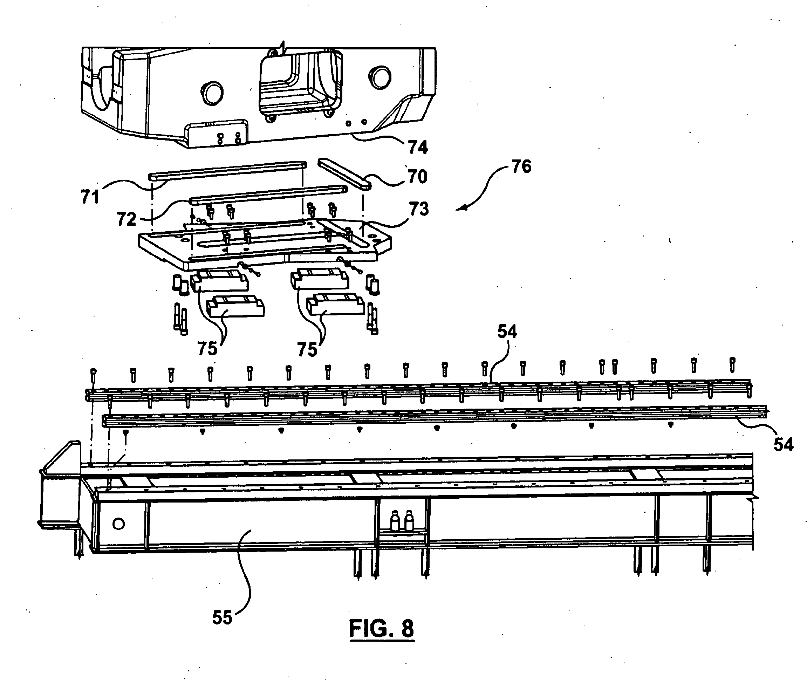

FIGs. 2 and 8 show that the second injection unit 52 is mounted on a carriage assembly 76 that includes a subplate 73 that rides on linear bearings 75 (in this case four in total). The linear bearings 75 are mounted on linear rails 54 that are attached to a second injection unit base 55. As a moving platen 53 moves from its mold open position (as shown in FIG. 1) to its mold closed position, it moves the second injection unit 52 along with it. The mold closed position for the second injection unit is shown at 56 of FIG. 1. Consequently, the connection between the second injection unit 52, the distributor block 20 and the hot runner 22 must be robust enough to transmit these forces of motion while accommodating any variations in alignment between the track of the moving platen 53 and the linear rails 54 that may be caused by thermal expansions or misalignments. Indeed, the movement of the large mass of the moving platen (and its acceleration and deceleration) causes distortion of a base of the clamp unit 50, which distortion induces multi-axial movement in the connection between the distributor block 20 and both the second injection unit 52 and the hot runner 22.

FIG. 8 shows flexible pads 70, 71 and 72 (configured in an array that, typically, is generally rectangular) that are positioned between the sub-plate 73 and a bottom surface 74 of the second injection unit 52 such that small variations in position and alignment between the second injection unit 52 and the movable platen 53 (containing the hot runner 22) are accommodated, thereby minimizing stress and wear on the second injection unit's carriage assembly 76, the linear rails 54 and the connection to the hot runner. In other words, the flexible pads 70-72 support dynamic adjustment of the location of the second injection unit 52 relative to the second injection base 55, thus mitigating mechanical stresses arising from component movement. The flexible pads 70-72 thus absorb the shock and vibrations caused by the movement of the second injection unit.

Preferably, each of the flexible pads is made of polyurethane. Of course other materials may be used, including any rubber or any flexible plastic material or any kind of steel spring connection. The configurations and overall size of the flexible pads 70-72 will change based on overall injection unit dimensions. Typical sizes for such flexible pads 70-72 would be approximately 850 millimetres (mm) in length, about 65mm in width and about 25mm in thickness. Of course, one or more flexible pads may be provided in any desired configuration(s). This structure is described in more detail in co-pending U.S. patent Application No. 10/966,710 entitled INJECTION MOLDING COUPLING APPARATUS AND METHOD OF COUPLING (Reference No. H-819-0-US), filed on 15 October 2004 and subsequently also filed as international patent application PCT/CA2005/001416.

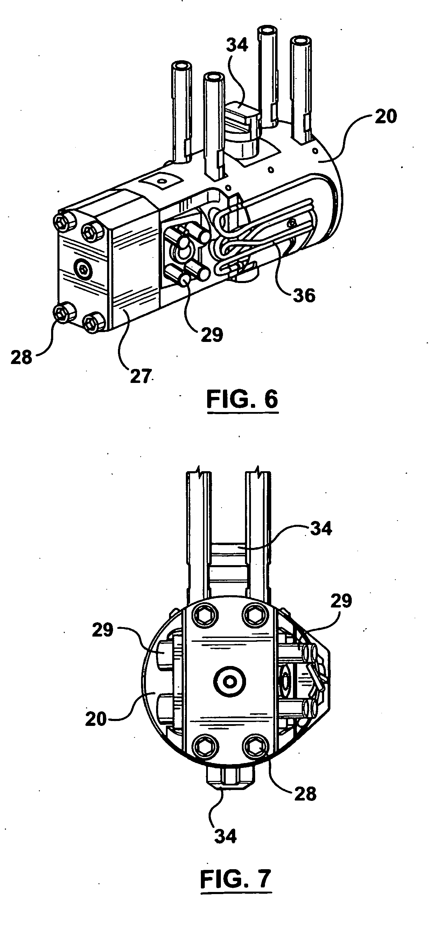

FIGs. 4 to 7 show the distributor block 20 that is connected to the end of the hot runner 22 with a movable, articulated sealed connection 200. The distributor block 20 includes a melt channel 33 that permits, in use, plastic melt to be communicated from the second injection unit 52 to the runner system 22. Preferably, the movable sealed connection 200 comprises a hot runner extension 21. The hot runner extension 21 may be fixed to the hot runner 22 with bolts 29, although it may also be integrally formed with the hot runner 22; the choice comes down to manufacturing preference, production costs and machining capabilities for the channels located therein. The hot runner extension 21 includes a hot runner extension melt channel 202 that connects and aligns with melt channels in the hot runner and also the distributor block 20. Preferably, the hot runner extension 21 is formed as a distinct part, although this is not essential.

The hot runner extension 21 has opposed spherical surfaces 23 and 24. In a preferred embodiment, these spherical surfaces 23 and 24 are both convex, although they could both be concave. Equally, one of the spherical surfaces could be concave and the other convex. These spherical surfaces 23 and 24 are configured so as to mate with first and second support pads 25 and 26 that have a complementary shape, thereby producing an open ball and socket-type interface. In other words, if the hot runner extension 21 has convex spherical surfaces, the first and second support pads have complementary concave surfaces. The support pads 25 and 26 are disposed on either side of the hot runner extension and, specifically, between a cap 27 (that is connected, e.g. bolted with screws 28, to the distributor block 20) and the distributor block 20.

Preferably, each of the concave support pads 25 and 26 is made of H13 steel, although other materials and configurations may be provided, e.g. ceramic and any steel or copper alloys. Dimensions of the support pads 25 and 26 will vary according to the overall size of the injection unit and runner system, although typical sizes could be about 80mm in diameter and about 40mm in thickness.

Looking at the first support pad 26 that interfaces between the spherical surface 24 of the hot runner extension 21 and the distributor block 20, this first support pad 26 includes a pad melt channel 31 that aligns and interfaces with both the melt channel 33 in the distributor 20 and the hot runner extension channel 202.

Connection of this first support pad 26 to the distribution block 20 can be achieved in a number of ways, including bolting of the pad 26 in the distributor block 20 or seating the support pad 26 into the surface of the distributor block 20. Alternatively, interfacing of the first support pad to the distributor block 20 could be achieved using a combination of bores (in abutting surfaces of the first support pad 26 and the distributor block 20) and an interconnecting tube that is held within the bore under compression. The "thin" wall tube would have a greater overall length than the bores, with the thin wall tube sealing (under compression) at both ends to provide a communicating melt passage between the melt channel 33 and the hot runner extension melt channel 202. Another mechanism of seating would be to use other flexible connections, such as an interface part of cylindrical shape. Yet another connection technique would be bolting or the use of a machined step that effects component interlocking. Retention of the first support pad 26 against the distributor block 20 under compressive loading is also possible, although not preferably. Such different connection mechanism will clearly be appreciated by the skilled addressee.

While the first support pad 26 and the hot runner extension 21 are in fluid communication and abutting contact with one another, they are nevertheless able to experience a relative sliding motion at this interface surface. Specifically, relative sliding is controlled and viable because of the complementary but mating spherical surfaces.

To produce an effective seal between the hot runner extension channel 202 and the pad melt channel 31, the second support pad 25 is used to sandwich the hot runner extension 21 relative to the first support pad 26. More specifically, since the cap 27 is coupled to the distributor block 20, the inclusion of a spring pack 30 between the cap 27 and a rear surface of the second support pad 25 produces a positive sealing force at the spherical interface between the first support pad 26 and the hot runner extension 21 (acting particularly in the region of the interface between the pad melt channel 31 and the hot runner extension channel 202).

In other words, the spring pack 30 is disposed to urge the concave pad 25 to press the hot runner extension 21 against the concave pad 26, thereby maintaining a good seal at the interface of a concave pad melt channel 31 (which passes through the concave pad 26). In use, therefore, the molten material thus moves from the injection unit barrel head 32, through a distributor block melt channel 33, through the concave pad melt channel 31, through a hot runner extension melt channel 202 and into a hot runner melt channel 204.

In all cases, therefore, there is provided a movable yet sealable connection between the hot runner 22 and the injection unit barrel head 32. The connection provides for universal axial movement of the distributor block relative to the hot runner extension 21, with the decoupling of the distributor block 20 from the hot runner ensuring that movement or deflection induced stresses (especially from the second injection unit 52) are not communicated to the hot runner 22. In other words, the floating nature of the spherical connection between the hot runner extension 21 and the first support pad 26 (that interfaces to the distributor block 20) guarantees approximate axial alignment (in any orientation) of the interconnected melt channels through a compression seal environment. More particularly, since the second injection unit 52 is coupled to the second injection unit base unit 55 via the flexible pads 70-72, and since the barrel of the second injection unit is relatively long and the barrel head 32 attaches to the distributor block 21 at an end remote to the bottom surface 74 (se FIG. 8) of the injection unit, any undesired movement of the injection unit has relatively little impact on the sealing surface realized by the mating spherical surfaces of the first support pad 26 and the hot runner extension 21. Consequently, the movable sealed connection 200 eliminates stresses that would otherwise be communicated through to the hot runner 22.

Both support pads 25 and 26 may be bolted to their respective seats or just be held by compression force from the spring pack 30.

Preferably, each of the spherical surfaces 23, 24 is made of H13 steel. The spherical surfaces 23, 24 typically have a hemispherical shape with a size dependent upon overall molding machine size, i.e. clamp tonnage. A typical spherical surface diameter could be approximately 120mm, with this complementary to the spherical surfaces of the support pads.

Preferably, the distributor block 20 is generally manufactured as a separate piece to the second injection unit 52 (rather than as an integral extension), since this allows the distributor block 20 to undergo, for example, independent surface hardening. The distributor block 20 may, in one embodiment, include a neck extension that is designed to accommodate and locate the hot runner extension 21 , with the neck extension extending beneath the hot runner extension 21 and permitting direct mounting of the cap and second support pad 25 to the neck extension (this is shown in FIG, 4).

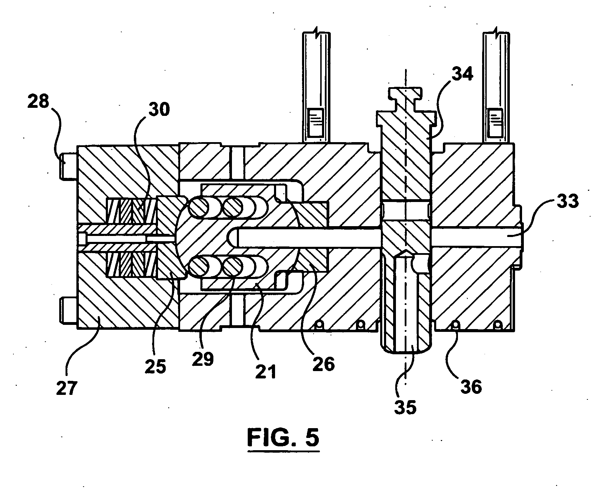

A three-position shut off valve plunger 34 is mounted in the distributor block 20 and is configured to allow the material (i) to pass through the valve, (ii) to be blocked by the valve, or (iii) to be diverted to a purging channel 35, depending upon the plunger's position. See FIG. 5. The three-position shut off valve assembly is described in co-pending U.S. patent Application 10/966715 entitled INJECTION MOLDING THREE-WAY SHUT OFF VALVE AND METHOD (Reference No. H-811-0-US) filed 15 October 2004 and subsequently filed international patent application PCT/CA2005/001504. In FIG. 3, a housing of a first cylinder 81 of a first piston 80 for controlling the three way shut off valve 34 is shown.

The distributor block 20 is heated conventionally with tubular heaters 36 or the like. The distributor block 20 is bolted to the injection unit barrel head 32 such that variations in the geometric relationship between the injection unit barrel head 32 and the hot runner 22 (caused by thermal expansion or movement during the opening and closing strokes of the machine) are accommodated by the sealing connection between the spherical surfaces 23 and 24 and the support pads 25 and 26 at the interface with the hot runner extension.

### THE OPERATION OF THE PREFERRED EMBODIMENT

In operation, as the second injection unit 52 moves together with the moving platen 53, the (articulated) movable sealed connection 200 between the injection unit barrel head 32 and the hot runner 22 will move slightly, causing the distributor block 20 to rotate in any direction with respect to the hot runner 22. The first and second support pads 25 and 26 will move with respect to their corresponding spherical surfaces 23 and 24 to accommodate this movement. Furthermore, while the second injection unit 52 is moved along rails 54, the flexible pads 70-72 will absorb any misalignment caused by this movement.

Advantageous features according to the present invention include the self-aligning sealing feature of the hot runner extension to distributor block connection. Clearly, the present invention therefore provides a self-aligning articulated coupling in an injection molding machine.

Thus, what has been described is a method and apparatus for providing a self-aligning articulated injection molding coupling which allows the melt to be transmitted between the injection unit and the hot runner system in a movable mold component, while reducing overall stresses to the runner system.

## Claims

1. An injection molding hot runner system (52, 53), comprising:
a hot runner (22) attached to a moving platen (53);
an injection unit (52);
an articulated joint (200) disposed with the hot runner (22) and configured to permit movement therebetween, said articulated joint (200) comprising:
a melt channel (202) configured to provide, in use, a melt to the hot runner (22);
a first spherical surface (24) in contact with a first concave pad (26); and
a second spherical surface (23) in contact with a second concave pad (25), one of the spherical surfaces (23, 24) being configured to be coupled to the hot runner (22), and the concave pads (25, 26) being configured to be coupled to said injection unit (52); **characterized in that**
said injection unit (52) is configured to move with respect to rails (54), and wherein a plurality of flexible pads (70, 71, 72) are configured:
(i) to be disposed between said injection unit (52) and the rails (54); and
(ii) to avoid overloading and damage on said injection unit (52) and the rails (54) caused by misalignment due to thermal elongation of heated components and/or incorrect setup/leveling,
wherein:
the injection unit (52) is mounted on a carriage assembly (76) that includes a subplate (73) that rides on linear bearings (75) being mounted on linear rails (54) that are attached to an injection unit base (55),
as the moving platen (53) moves from its mold open position to its mold closed position, the moving platen (53) moves the injection unit (52) along with it,
the flexible pads (70, 71, 72) are positioned between the sub-plate (73) and a bottom surface (74) of the injection unit (52) such that small variations in position and alignment between the injection unit (52) and the moving platen (53) containing the hot runner (22) are accommodated, thereby minimizing stress and wear on the carriage assembly (76) of the injection unit (52), the linear rails (54) and the connection to the hot runner (22),
the flexible pads (70, 71, 72) support dynamic adjustment of the location of the injection unit (52) relative to the injection unit base (55), thus mitigating mechanical stresses arising from component movement, thus the flexible pads (70, 71, 72) absorb the shock and vibrations caused by the movement of the injection unit (52), and
while the injection unit (52) is moved along rails (54), the flexible pads (70, 71, 72) absorb any misalignment caused by this movement.

2. The injection molding hot runner system according to Claim 1, further comprising a distributor block (20) coupled between the injection unit (52) and the articulated joint (200).

3. The injection molding hot runner system according to Claim 2, wherein said distributor block (20) is bolted to said injection unit (52), and wherein said articulated joint (200) is bolted (29) to the hot runner (22).

4. The injection molding hot runner system according to Claim 3, wherein said distributor block (20) has a melt channel (33) therein in fluid communication with the injection unit (52), and wherein the first concave pad (26) is coupled to said distributor block (20), and wherein the first concave pad (26) has a melt channel (31) therein in fluid communication with both the distributor block melt channel (33) and the articulated joint melt channel (202).

5. The injection molding hot runner system according to Claim 4, further comprising structure (27, 28, 30) configured to press the first and second concave pads (25, 26) against the first and second spherical surfaces (23, 24), respectively.

6. The injection molding hot runner system according to Claim 5, wherein said structure comprises a spring device (30) coupled to an end of said distributor block (20).

7. The injection molding hot runner system according to Claim 1 , wherein:
the injection unit (52) is coupled to the injection unit base (55) via the flexible pads (70, 71, 72), and
the barrel of the injection unit (52) is relatively long and the barrel head (32) attaches to the distributor block (20) at an end remote to the bottom surface (74) of the injection unit (52), wherein any undesired movement of the injection unit (52) has relatively little impact on the sealing surface realized by the mating spherical surfaces of the first concave pad (26) and the hot runner extension (21).

## Patentansprüche

1. Spritzgieß-Heißkanalsystem (52, 53), mit:
einem Heißkanal (22), der an einer bewegbaren Platte (53) befestigt ist;
einer Einspritzeinheit (52);
einer Gelenkverbindung (200), die an dem Heißkanal (22) vorgesehen und so ausgebildet ist, daß sie eine Bewegung dazwischen gestattet, wobei die Gelenkverbindung (200) umfaßt:
einen Schmelzenkanal (202), der so ausgebildet ist, daß er im Gebrauch eine Schmelze an den Heißkanal (22) liefert;
eine erste kugelförmige Fläche (24) in Kontakt mit einem ersten konkaven Kissen (26); und
eine zweite kugelförmige Fläche (23) in Kontakt mit einem zweiten konkaven Kissen (25), wobei eine der kugelförmigen Flächen (23, 24) so ausgebildet ist, daß sie mit dem Heißkankal (22) gekuppelt werden kann, und die konkaven Kissen (25, 26) so ausgebildet sind, daß sie mit der Einspritzeinheit (52) gekuppelt werden können;
**dadurch gekennzeichnet, daß**
die Einspritzeinheit (52) so ausgebildet ist, daß sie relativ zu Schienen (54) bewegbar ist, und wobei eine vierzahl von flexiblen Kissen (70, 71, 72) so ausgebildet sind, daß sie:
(i) zwischen der Einspritzeinheit (52) und den Schienen (54) angeordnet werden; und
(ii) eine Überlast und eine Beschädigung an der Einspritzeinheit (52) und den Schienen (54) vermeiden, die durch eine Fehlausrichtung infolge einer thermischen Elongation der erhitzten Komponenten und/oder eines unkorrekten Aufstellens/Einstellens verursacht werden,
wobei:
die Einspritzeinheit (52) auf einer Schlittenanordnung (76) montiert ist, die eine Subplatte (73) umfaßt, welche auf Linearlagern (75) fährt, die auf Linearschienen (54) montiert sind, welche an der Einspitzeinheitsbasis (55) befestigt sind,
bei Bewegung der bewegbaren Platte (53) aus ihrer Formöffnungsposition in ihre Formschließposition die bewegbare Platte (53) die Einspritzeinheit (52) mit ihr entlang bewegt,
die flexiblen Kissen (70, 71, 72) zwischen der Subplatte (73) und einer Unterseite (74) der Einspritzeinheit (52) derart angeordnet sind, daß kleine Variationen in der Position und Ausrichtung zwischen der Einspritzeinheit (52) und der bewegbaren Platte (53), welche den Heißkanal (22) enthält, aufgenommen werden, wodurch Spannung und Abnützung an der Schlittenanordnung (76) der Einspritzeinheit (52), den Linearschienen (54) und der Verbindung zum Heißkanal (22) minimiert werden,
wobei die flexiblen Kissen (70, 71, 72) eine dynamische Einstellung der Lage der Einspritzeinheit (52) relativ zur Einspritzeinheitsbasis (55) unterstützen, wodurch mechanische Beanspruchungen, die aus der Komponentenbewegung resultieren, gemildert werden, derart, daß die flexiblen Kissen (70, 71, 72) Stöße und Vibrationen absorbieren, die durch die Bewegung der Einspritzeinheit (52) verursacht werden, und
während die Einspritzeinheit (52) entlang der Schienen (54) bewegt wird, die flexiblen Kissen (70, 71, 72) jede Fehlausrichtung, die durch diese Belegung verursacht wird, absorbieren.

2. Spritzgieß-Heißkanalsystem nach Anspruch 1, das ferner einen Verteilerblock (20) aufweist, der zwischen der Einspritzeinheit (52) und der Gelenkverbindung (200) gekuppelt ist.

3. Spritzgieß-Heißkanalsystem nach Anspruch 2, bei welchem der Verteilerblock (20) an die Einspritzeinheit (52) geschraubt ist, und wobei die Gelenkverbindung (200) an den Heißkanal (22) geschraubt ist (29).

4. Spritzgieß-Heißkanalsystem nach Anspruch 3, bei welchem der Verteilerblock (20) einen Schmelzenkanal (33) in Fluidverbindung mit der Einspritzeinheit (52) aufweist, und wobei das erste konkave Kissen (26) an den Verteilerblock (20) gekuppelt ist, und wobei das erste konkave Kissen (26) einen Schmelzenkanal (31) in Fluidverbindung mit sowohl dem Verteilerblock-Schmelzenkanal (33) als auch der gelenkigen Schmelzenkanal-Verbindung (202) aufweist.

5. spritzgieß-Heißkanalsystem nach Anspruch 4, das ferner eine Struktur (27, 28, 30) aufweist, die so ausgebildet ist, daß sie das erste und zweite konkave Kissen (25, 26) gegen die erste und zweite kugelförmige Fläche (23, 24) preßt.

6. Spritzgieß-Heißkanalsystem nach Anspruch 5, bei welchem die Struktur eine Federvorrichtung (30) aufweist, die an ein Ende des Verteilerblockes (20) gekuppelt ist.

7. Spritzgieß-Heißkanalsystem nach Anspruch 1, bei welchem:
die Einspritzeinheit (52) an die Einspritzeinheitsbasis (55) über die flexiblen Kissen (70, 71, 72) gekuppelt ist, und
die Trommel der Einspritzeinheit (52) relativ lang ist, und der Trommelkopf (32) an dem Verteilerblock (20) an einem Ende entfernt von der Bodenfläche (74) der Einspritzeinheit (52) befestigt ist, wodurch jede unerwünschte Bewegung der Einspritzeinheit (52) relativ kleine Auswirkung auf die Dichtungsfläche hat, die durch die zusammenpassenden kugelförmigen Oberflächen des ersten konkaven Kissens (26) und der Heißkanalverlängerung (21) gebildet ist.

## Revendications

1. Système de moulage par injection à canaux chauffants (52, 52), comprenant :
un canal chauffant (22) fixé sur une plaque mobile (53) ;
une unité d'injection (52) ;
un joint articulé (200) disposé avec le canal chauffant (22) et configuré pour permettre un déplacement entre eux, ledit joint articulé (200) comprenant :
un canal de matière fondue (202) configuré pour fournir, en utilisation, une matière fondue au canal chauffant (22) ;
une première surface sphérique (24) en contact avec un premier patin concave (26) ; et
une seconde surface sphérique (23) en contact avec un second patin concave (25), l'une des surfaces sphériques (23, 24) étant configurée pour être couplée au canal chauffant (22), et les patins concaves (25, 26) étant configurés pour être couplés à ladite unité d'injection (52) ; **caractérisé en ce que**
ladite unité d'injection (52) est configurée pour se déplacer par rapport aux rails (54), et dans lequel une pluralité de patins flexibles (70, 71, 72) sont configurés :
(i) pour être disposés entre ladite unité d'injection (52) et les rails (54) ; et
(ii) pour éviter la surcharge et l'endommagement sur ladite unité d'injection (52) et les rails (54) causés par le désalignement dus à l'allongement théorique des composants chauffés et/ou au réglage/mise à niveau incorrect,
dans lequel :
l'unité d'injection (52) est montée sur un ensemble de chariot (76) qui inclut une sous-plaque (73) qui avance sur des paliers linéaires (75) montés sur des rails (54) linéaires qui sont fixés sur une base d'unité d'injection (55),
quand la plaque mobile (53) se déplace de sa position ouverte de moule vers sa position fermée de moule, la plaque mobile (53) déplace l'unité d'injection (52) avec elle,
les patins flexibles (70, 71, 72) sont positionnées entre la sous-plaque (73) et une surface inférieure (74) de l'unité injection (52) de telle manière que de petites variations en position et en alignement entre l'unité d'injection (52) et la plaque mobile (53) contenant le canal chauffant (22) sont tolérées, minimisant ainsi les contraintes et l'usure sur l'ensemble de chariot (76) de l'unité injection (52), les rails (54) et la connexion au canal chauffant (22),
patins flexibles (70, 71, 72) supportent un ajustement dynamique de la position de l'unité d'injection (52) par rapport à la base d'unité d'injection (55), atténuant ainsi l'apparition de contraintes mécaniques lors du déplacement du composant, ainsi les patins flexibles (70, 71, 72) absorbent le choc et les vibrations causés par le déplacement de l'unité d'injection (52), et
quand l'unité d'injection (52) est déplacée le long des rails (54), les patins flexibles (70, 71, 72) absorbent tout désalignement causé par ce déplacement.

2. Système de moulage par injection à canaux chauffants selon la revendication 1, comprenant en outre un bloc distributeur (20) couplé entre l'unité d'injection (52) et le joint articulé (200).

3. Système de moulage par injection à canaux chauffants selon la revendication 2, dans lequel ledit bloc distributeur (20) est vissé (29) sur ladite unité d'injection (52), et dans lequel ledit joint articulé (200) est vissé sur le canal chauffant (22).

4. Système de moulage par injection à canaux chauffants selon la revendication 3, dans lequel ledit bloc distributeur (20) a un canal de matière fondue (33) à l'intérieur en communication fluide avec l'unité d'injection (52), et dans lequel le premier patin concave (26) est couplé au dit bloc distributeur (20), et dans lequel le premier patin concave (26) a un canal de matière fondue (31) à l'intérieur en communication fluide avec à la fois le canal de matière fondue (33) du bloc distributeur et le canal de matière fondue (202) du joint articulé.

5. Système de moulage par injection à canaux chauffants selon la revendication 4, comprenant en outre une structure (27, 28, 30) configurée pour presser les premier et second patins concaves (25, 26), respectivement contre les première et seconde surfaces sphériques (23, 24).

6. Système de moulage par injection à canaux chauffants selon la revendication 5, dans lequel ladite structure comprend un dispositif de ressort (30) couplé à une extrémité dudit bloc distributeur (20).

7. Système de moulage par injection à canaux chauffants selon la revendication 1, dans lequel:
l'unité d'injection (52) est couplée à la base d'unité injection (55) via les patins flexibles (70, 71, 72), et
le cylindre de l'unité d'injection (52) est relativement long et la tête de cylindre (32) est fixée sur le bloc distributeur (20) à une extrémité distante de la surface inférieure (74) de l'unité d'injection (52), dans lequel tout mouvement indésirable de l'unité injection (52) a un impact relativement faible sur la surface de fermeture étanche réalisée par les surfaces sphériques accouplées du premier patin concave (26) et de l'extension de canal chauffant (21).
